# EUROPÄISCHE PATENTSCHRIFT

(11) **EP 0 925 333 B1**
(45) Veröffentlichungstag und Bekanntmachung des Hinweises auf die Patenterteilung: **25.09.2002**
(21) Anmeldenummer: 98938633.9
(22) Anmeldetag: 23.06.1998
(51) Int. Cl.: C09D 5/02, C09D 7/12

(54) **FROSTSTABILISIERUNG VON WÄSSRIGEN ÜBERZUGSMITTELN DURCH FROSTSCHUTZPROTEINE**
ANTIFREEZE STABILISATION OF AQUEOUS COATINGS USING ANTI-FREEZE PROTEINS
STABILISATION ANTIGEL D'AGENTS DE RECOUVREMENT AQUEUX AU MOYEN DE PROTEINES ANTIGEL

(30) Priorität: 15.07.1997 DE 19730280
(43) Veröffentlichungstag der Anmeldung: 30.06.1999
(73) Patentinhaber: E.I. DU PONT DE NEMOURS AND COMPANY, Wilmington Delaware 19898 (US)
(72) Erfinder: SCHÄFFER, Hermann, D-42275 Wuppertal (DE)
(74) Vertreter: Hrabal, Ulrich, Dr.
(86) Internationale Anmeldenummer: EP9803840
(87) Internationale Veröffentlichungsnummer: WO99003931

(56) Entgegenhaltungen:
- WO-A-96/11586
- GB-A- 2 110 518
- US-A- 2 687 384
- US-A- 3 151 091

## Beschreibung

Die Erfindung betrifft die Froststabilisierung von wäßrigen Überzugsmitteln sowie von wäßrigen Halbfabrikaten bzw. Modulbausteinen zur Herstellung wäßriger Überzugsmittel.

Auf dem Gebiet der Fahrzeug- und Industrielackierung gewinnen wäßrige Lacke zunehmend an Bedeutung. So sind beispielsweise in der Autoserien- und Autoreparaturlackierung wäßrige Lacke bereits im Markt eingeführt. Insbesondere in der Autoreparaturlackierung werden an die eingesetzten Überzugsmittel hohe Anforderungen bezüglich der Lagerstabilität gestellt. Es sind beispielsweise Langzeitlagerstabilitäten von mindestens 24 Monaten gefordert.

Wäßrige Dispersionen sind in der Regel empfindlich gegen Gefrieren. Schäden durch Gefrieren äußern sich bei Wasserlacken z.B. in einem Anstieg der Viskosität, einer Verminderung der Farbstärke und/oder Veränderung des Farbortes bei unifarbenen Lacken sowie einem geringeren Hell-Dunkel-Flop bei Metallic-Effektlacken. Bei aluminiumhaltigen Effektlacken kann auch die Stabilität gegen eine unerwünschte Reaktion des Aluminiums mit Wasser beeinträchtigt werden. Auf Grund dieser Tatsache ist während des Transports und der Lagerung der Wasserlacke bzw. ihrer wäßrigen Bausteine zu verhindern, daß die Lacke Temperaturen unterhalb des Gefrierpunktes ausgesetzt werden. Dies erfordert jedoch einen höheren organisatorischen Aufwand in Logistik und Transport sowie erhöhte Kosten bei der Lagerhaltung, z.B. durch Beheizung der Lagerräume. Es besteht somit ein Bedarf nach geeigneten Methoden oder Verfahren, welche eine erhöhte Stabilität von Wasserlacken gegenüber Gefrieren bewirken.

In der EP 558 612 sind beispielsweise Polymermischungen beschrieben, die wäßrigen Dispersionen eine erhöhte Gefrier-Auftau-Stabilität verleihen sollen. Es handelt sich dabei um Polymermischungen aus in Wasser dispergierbaren Sulfonatgruppen enthaltenden Polyestern oder Polyesteramiden und Polymeren, die 0,1-20 Gew.-% eines Acrylamidsulfonatmonomeren und 80-99,9 Gew.-% mindestens eines anderen ethylenisch ungesättigten Monomeren enthalten. Diese speziellen Polymermischungen sind jedoch vorrangig zur Herstellung von Druckfarben bzw. Tinten geeignet. Eine Anwendbarkeit in beliebigen Überzugsmitteln für die Fahrzeuglackierung ist nicht gegeben.

Desweiteren gibt es verschiedene wissenschaftliche Untersuchungen, die sich mit den Frostschutzmechanismen bestimmter Tierarten, insbesondere einiger arktischer und antarktischer Fischarten, befassen. Sogenannte natürliche Frostschutzproteine sollen die Zellflüssigkeit vor den schädlichen Folgen des Gefrierens schützen. Die Wirksamkeit der Frostsschutzproteine wird mit einer komplexen Wechselwirkung von polaren und unpolaren Struktureinheiten der Proteine sowohl untereinander als auch mit der Oberfläche wachsender Eiskristalle erklärt ("Structure-function relationships in an antifreeze polypeptide", The Journal of Biological Chemistry, Vol. 267 No.20, pp. 14102-14108, July 1992) und führt zu einer Inhibierung des Eiskristallwachstums.

Es ist bereits bekannt, die natürlich vorkommenden Frostschutzproteine zu isolieren, synthetisch herzustellen bzw. mittels Mikroorganismen zu produzieren und im Nahrungsmittelsektor zur Herstellung gefrosteter Lebensmittel oder im landwirtschaftlichen Bereich für spezielle Nutzpflanzen einzusetzen.

So beschreibt beispielsweise die US 5,118,792 die Herstellung spezieller Antifrost-Polypeptide und ihre Anwendung zur Froststabilisierung von Lebensmitteln und biologischem Material, wie z.B. landwirtschaftlichen Nutzpflanzen und Organgewebe.

Weiterhin wird in der WO-A- 96/39878 die Herstellung von eingefrorenen Lebensmitteln, z.B. Joghurt oder Eiscreme, unter Zusatz von Antifrost-Polypeptiden beschrieben. Dabei werden die Inhaltsstoffe, einschließlich Wasser und Antifrost-Polypeptid, gemischt, pasteurisiert, homogenisiert und bei Temperaturen von 0 bis -4 °C eingefroren. Die Lagerung erfolgt bei Temperaturen von -21 bis -27 °C. Durch den Einsatz der Antifrost-Polypeptide kann der bei der Lebensmittelherstellung sonst notwendige Schritt der Schockgefrierung bei -27 bis -39 °C eingespart werden.

In der WO-A-96/11586 wird die Herstellung von gefrosteten fermentierten Nahrungsmitteln, insbesondere von Molkereiprodukten beschrieben, wobei Mikroorganismen eingesetzt werden, die in der Lage sind, die Nahrungsmittel zu fermentieren und gleichzeitig Fisch-Antifrost-Polypeptide zu bilden.

Im Stand der Technik sind somit Einsatz und Produktion von Antifrost-Polypeptiden in einer natürlichen oder im wesentlichen aus Naturstoffen bestehenden Umgebung offenbart. In ihrer natürlichen Umgebung, bzw. einem Milieu, welches dieser sehr ähnlich ist, kann die Wirksamkeit der Antifrost-Polypeptide erwartet werden. Da die Wirksamkeit sehr stark von der Struktur abhängig ist - siehe auch "Structure-Function Relationship in an Antifreeze-Polypeptide", The Journal of Biological Chemistry, Vol. 267, No. 20, pp. 14102 - 14108, July 1992" - und die Struktur wiederum von der Umgebung des Moleküls abhängt, ist mit einem Erhalt der Wirksamkeit bzw. Funktion der Peptide oder Proteine zumindest in lösemittelhaltigen Systemen, wie z.B. Überzugsmittelzusammensetzungen nicht zu rechnen. Es ist z.B. bekannt, daß organische Lösemittel, wie z.B. Alkohole oder Aceton zur Denaturierung von Proteinen verwendet werden. Verschiedene makromolekulare Substanzen, wie z.B. einige der in Überzugsmitteln enthaltenen Bindemittel, sind z.B. als Ausflockmittel für Proteine bekannt. Es ist daher nicht verwunderlich, daß der Einsatz von Antifrost-Polypeptiden auf dem Gebiet der Fahrzeug- und Industrielackierung den oben genannten Veröffentlichungen nicht zu entnehmen ist.

Aufgabe der Erfindung war es, eine Methode bereitzustellen, die es ermöglicht, wäßrige Überzugsmittel sowie wäßrige Halbfabrikate bzw. Modulbausteine zur Herstellung von wäßrigen Überzugsmitteln gegenüber Gefrieren zu stabilisieren. Die wäßrigen Überzugsmittel bzw. ihre wäßrigen Bausteine sollen so modifiziert werden, daß ein oder mehrere Gefrier-Auftau-Zyklen keine oder zumindest auf ein Minimum reduzierte negative Auswirkungen auf die technologischen Eigenschaften und die Qualität der Überzugsmittel sowie der daraus erhaltenen Überzüge zeigen.

Die Aufgabe wird durch die Verwendung von Frostschutzproteinen zur Froststabilisierung von wäßrigen Überzugsmitteln, wäßrigen Halbfabrikaten bzw. Modulbausteinen zur Herstellung wäßriger Überzugsmittel gelöst.

Unter wäßrigen Überzugsmitteln sollen hierbei die fertigen Überzugsmittel sowie die zu fertigen Überzugsmitteln kombinierbaren einzelnen wäßrigen Mischlacke, Halbfabrikate und Modulbausteine verstanden werden. Die jeweilige zu stabilisierende Form hängt davon ab, in welcher Art und Weise die Überzugsmittel gefertigt werden, z.B. mittels Grundauffertigung oder aus Mischlacken bzw. Modulbausteinen, und daraus abgeleitet in welcher Form die Lager- bzw. Vorratshaltung betrieben wird.

Bei den Frostschutzproteinen handelt es sich um natürliche bei bestimmten Tierarten zum Schutz ihrer Zellflüssigkeit gegen Gefrieren vorkommende Antifrost-Proteine, die in der Lage sind, das Wachstum von Eiskristallen zu inhibieren bzw. die Größe der Eiskristalle zu minimieren. Geeignete Antifrost-Proteine können aus Blutzellen oder Muskelgewebe von arktischen oder antarktischen Fischen, Würmern und Insekten gewonnen werden. Synthetische Antifrost-Proteine können beispielsweise mittels rekombinante DNA-Techniken erzeugt werden. Dabei werden bestimmte DNA-Sequenzen auf andere Organismen, z.B. Bakterien wie Escherichia coli, oder Hefen wie Saccharomyces-Spezies, oder transgene Pflanzen übertragen. Diese Organismen sind dann ihrerseits in der Lage, die Antifrost-Proteine zu erzeugen.

Die erfindungsgemäß zur Froststabilisierung der wäßrigen Überzugsmittel eingesetzten Frostschutzproteine können in Antifrost-Peptide (AFPs - anti-freezepeptides) und Antifrost-Glycoproteine (AFGPs - anti-freeze-glycoproteins) unterteilt werden. Die Antifrost-Polypeptide haben einen amphiphilen Charakter und enthalten Alanin als dominierende Aminosäure. Sie bestehen zu mindestens 70 % aus hydrophoben Aminosäuren, weisen aber in periodischer Folge beispielsweise 2-5 kurze Sequenzen aus beispielsweise 2-4 hydrophilen Aminosäuren, sogenannte eisbindende Motive, auf. Beispiele für hydrophobe Aminosäuren sind Alanin, Valin, Leucin, Isoleucin, Serin, Cystein, Methionin. Prolin, Phenylalanin und Tryptophan.

Beispiele für hydrophile Aminosäuren sind Glycin, Threonin, Asparaginsäure, Asparagin, Glutaminsäure, Glutamin, Lysin, Arginin, Histidin und Tyrosin.

Entsprechend ihrer Struktur werden die Antifrost-Polypeptide in verschiedene Typen klassifiziert. Antifrost-Polypeptide vom Typ I sind alaninreich und weisen eine Alpha-Helix-Struktur auf. Antifrost-Polypeptide vom Typ III sind kleine Proteine, die kompliziert gefaltet und überwiegend aus Beta-Faltblättern aufgebaut sind. Antifrost-Polypeptide vom Typ II haben einen relativ hohen Cysteingehalt. Es liegen noch wenig detaillierte Strukturkenntnisse vor.

Die primäre Struktur der Antifrost-Glycoproteine zeigt eine sich wiederholende Alanin-Alanin-Threonin-Sequenz, an die ein spezielles Disaccharid gebunden ist (Galactosyl-N-acetylgalactosamin). Entsprechend ihrer relativen elektrophoretischen Migration in Gelen werden die Antifrost-Glycoproteine in Typen I bis VIII eingeteilt.

Die Herstellung bzw. Gewinnung von Antifrost-Polypeptiden vom Typ I bis III ist bekannt und wird in der Literatur wiederholt beschrieben. Beispielsweise ist in der WO-A- 90/13571 ausführlich die Herstellung von Antifrost-Polypeptiden auf chemischen Wege und mittels rekombinanter DNA-Techniken beschrieben. Struktur und Gewinnung weiterer natürlicher und synthetisch hergestellter Antifrost-Polpeptide werden z.B. beschrieben in: "Structure-function relationships in an antifreezepolypeptide", The Journal of Biological Chemistry, Vol. 267, No.20, pp. 14102-14108, July 1992 (Typ I), "The nonhelical structure of antifreeze protein type III", Science, Vol. 259, pp. 1154-1157, February 1993, "Ice-binding structure and mechanism of an antifreeze protein from winter flounder", Nature, Vol. 375, pp. 427-431, June 1995 (Typ I), WO-A-96/11586, WO-A-97/02343 (Typ III).

Überraschend wurde nun gefunden, daß die im Bereich bestimmter Tierarten, Lebensmittel und landwirtschaftlicher Nutzpflanzen wirksamen Frostschutzproteine auch in wäßrigen Überzugsmitteln eine Stabilisierung gegenüber Gefrier-Auftau-Prozessen bewirken, obwohl auf Grund der für die Lackindustrie üblichen Zusammensetzung der wäßrigen Überzugsmittel eine gleichartige Wirkung nicht zu erwarten war. Die in der Fahrzeug- und Industrielackierung üblicherweise eingesetzten wäßrigen Überzugsmittel enthalten neben dem Hauptlösemittel Wasser noch Anteile sogenannter Colösemittel. Durch Auswahl und Menge der Colösemittel können bestimmte lacktechnische Eigenschaften, wie z.B. Viskosität, Filmbildung und Verlauf, beeinflußt werden. Die Colösemittel können bevorzugt in Mengen von beispielsweise 5 - 20 Gew.-%, besonders bevorzugt unter 15 Gew.-%, in den Überzugsmitteln enthalten sein. Das Gewichtsverhältnis Wasser : Lösemittel in den Wasser-Lösemittel-Gemischen in den Überzugsmitteln kann beispielsweise 5 : 1 bis 11 : 1 betragen.

Die Colösemittel sind bevorzugt wassermischbar. Es handelt sich um übliche organische Lösemittel, wie sie in der Lackindustrie eingesetzt werden. Diese können aus der Herstellung der Bindemittel stammen oder werden separat zugegeben. Beispiele für solche Lösemittel sind ein- oder mehrwertige Alkohole, z.B. Propanol, Butanol, Hexanol; Glykolether oder -ester, z.B. Diethylenglykoldialkylether, Dipropylenglykoldialkylether, jeweils mit C1- bis C6-Alkyl, Ethoxypropanol, Butylglykol; Glykole, z.B. Ethylenglykol, Propylenglykol und deren Oligomere, N-Methylpyrrolidon sowie Ketone, z.B. Methylethylketon, Aceton, Cyclohexanon; aromatische oder aliphatische Kohlenwasserstoffe, z.B. Toluol, Xylol oder lineare oder verzweigte aliphatische C6-C12-Kohlenwasserstoffe.

Es war überraschend, daß die genannten Frostschutzproteine auch in Gemischen aus Wasser, organischen Lösemitteln und Polymeren ihre Wirksamkeit behalten, da ein Wirkungsverlust aufgrund von Denaturierung und/oder Ausflockung zu erwarten war.

Die Erfindung betrifft auch die wäßrigen Überzugsmittel und Halbfabrikate bzw. Modulbausteine zur Herstellung wäßriger Überzugsmittel, welche die Frostschutzproteine enthalten.

Gegenstand der Erfindung sind somit auch wäßrige Überzugsmittel, enthaltend:
A) ein oder mehrere wasserverdünnbare Bindemittel,
B) Wasser,
C) ein oder mehrere Frostschutzproteine,
D) gegebenenfalls ein oder mehrere Vernetzer,
E) gegebenenfalls Pigmente, Füllstoffe und lackübliche Additive,
F) gegebenenfalls organische Lösemittel und weitere Hilfsstoffe wie z.B. antibakteriell und/oder antifungizid wirkende Substanzen.

Vorzugsweise sind die Frostschutzproteine in Mengen von 0,001 bis 0,2 Gew.-%, besonders bevorzugt in Mengen von 0,002 bis 0,1 Gew.-%, bezogen auf das gesamte Überzugsmittel, enthalten.

Erfindungsgemäß finden die Frostschutzproteine insbesondere Anwendung in der Fahrzeug- und Industrielackierung zur Stabilisierung beliebiger wäßriger Überzugsmittel gegenüber Gefrier-Auftau-Prozessen. Bei den Überzugsmitteln handelt es sich um die üblichen in der Lackindustrie einsetzbaren und insbesondere für die Fahrzeuglackierung typischen wäßrigen Überzugsmittel, wie zum Beispiel wäßrige Grundierungen, Füller, Basislacke, pigmentierte oder transparente Decklacke.

Die Frostschutzproteine können bei der Herstellung der wäßrigen Überzugsmittel grundsätzlich an beliebiger Stelle zugegeben werden. Vorteilhaft ist es, die Frostschutzproteine mit den anderen lacküblichen Additiven und Hilfsstoffen gemeinsam zuzugeben. Die Frostschutzproteine können dabei dem zu fertigenden Überzugsmittel oder Mischlack oder einzelnen Modulbausteinen , z.B. einer wäßrigen Pigmentpaste oder einem wäßrigen Bindemittelmodul, beliebig zugegeben werden. Vorteilhafterweise werden die Frostschutzproteine in einer Pufferlösung als Proteinlösung bereitgestellt. In dieser Form lassen sich die Proteine am besten in die Überzugsmittel einarbeiten. Besonders vorteilhaft ist es, wenn die Proteinlösung einen ähnlichen pH-Wert wie der fertige Lack aufweist.

Bei den zu stabilisierenden Überzugsmitteln kann es sich um die vorstehend genannten wäßrigen Füller, Grundierungen, Basislacke und pigmentierten oder transparenten Decklacke handeln. Die Überzugsmittel enthalten dabei die für eine Anwendung in der Fahrzeuglackierung üblichen und dem Fachmann bekannten Bindemittel, Pigmente, Füllstoffe. Lösemittel, Lackadditive und Hilfsstoffe und werden nach den üblichen Herstellungsverfahren für derartige Überzugsmittel erhalten. Die Überzugsmittel sind bezüglich der Anwendung der Frostschutzproteine keinerlei Beschränkungen unterworfen. Es ist jedoch von Vorteil, den wäßrigen Überzugsmitteln als zusätzlichen Hilfsstoff ein oder mehrere Konservierungsmittel gegen Bakterien und Pilzbefall zuzusetzen. Es kann sich dabei beispielsweise um handelsübliche Konservierungsmittel mit bakteriziden und/oder fungiziden Wirkstoffen handeln. Übliche Konservierungsmittel sind z.B. unter den Bezeichnungen Ketjenflex^{R} 9S (Firma Akzo; 40 % p-Toluolsulfonamid + 60 % o-Toluolsulfonamid) und Mergal^{R} (Firma Riedel de Haen; verschiedene Mergal^{R}-Typen; u.a. enthaltend Chloracetamid, Myristylalkoniumchlorid. Thiozolderivate, 1,2-Beziisothiazolin-3-on) im Handel erhältlich. Die Konservierungsmittel können den Überzugsmitteln direkt zugesetzt oder vorzugsweise in der gepufferten Proteinlösung zugegeben werden.

Durch die erfindundungsgemäße Verwendung der Frostschutzproteine in Wasserlacken können die negativen Auswirkungen, die ein oder mehrere Gefrier-Auftau-Prozesse in den wäßrigen Überzugsmitteln bewirken, weitgehend unterdrückt werden. Solche Eigenschaften der Überzugsmittel bzw. der daraus hergestellten Überzüge wie Viskosität, Farbstärke, Metalleffektausbildung und Gasungsstabilität bei aluminiumpigmenthaltigen Lacken werden bei Einwirkungen von Temperaturen unter 0 °C auf die Überzugsmittel nicht oder nur unwesentlich negativ beeinflußt.

Die Erfindung soll an den folgenden Beispielen erläutert werden.

### 1. Beispiel

### Herstellung einer Proteinlösung

Zunächst wurde eine Pufferlösung hergestellt, indem 2,5 g einer 40 %igen wäßrigen Lösung eines Bindemittels mit einer Säurezahl von 10 (Disperbyk^{R} 190 als Stellvertreter für gut lösliche säurefunktionelle Bindemittel) mit 96,7 g Wasser versetzt und mit 0,8 g einer 1 %igen Lösung von Dimethylethanolamin in Wasser bis zu einem pH-Wert von 8,0 neutralisiert wurden.

Dann wurden 0,5 g eines Frostschutzproteins in 99,3 g der Pufferlösung eingerührt und 0,2 g eines handelsüblichen antibakteriellen Konservierungsmittels zugegeben.

### 2. Beispiel

### Herstellung eines Uni-Wasserbasislackes/stabilisiert und eines Uni-Wasserbasislackes/unstabilisiert (Vergleich)

Aus folgenden Bestandteilen wurden uni-pigmentierte Wasserbasislacke hergestellt. Die Bindemittel-Dispersionen A und B wurden entsprechend DE-A- 43 44 063 Herstellungsbeispiel 1 und Herstellungsbeispiel 2 hergestellt. Es handelt sich um wäßrige Polyurethandispersionen.

| Bestandteile | Vergleichsbeispiel | Froststabile Variante |
|---|---|---|
| Dispersion A | 19,7 Tle. | 19,7 Tle. |
| Dispersion B | 21,6 Tle. | 21,6 Tle. |
| Wasser | 22,4 Tle. | 12,4 Tle. |
| Proteinlösung | 0,0 Tle. | 10,0 Tle. |
| handelsübliches Bakterizid | 0,2 Tle. | 0,2 Tle. |
| n-Butanol | 1,8 Tle. | 1,8 Tle |
| Butylglykol | 3,7 Tle. | 3,7 Tle. |
| handelsüblicher Verdicker | 1,3 Tle. | 1,3 Tle. |
| N,N-Dimethylethanolamin | 0,2 Tle. | 0,2 Tle. |
| handelsübliches Titandioxidpigment | 18,6 Tle. | 18,6 Tle. |
| handelsübliches Cu-Phthalocyaninpigment | 0,4 Tle. | 0,4 Tle. |
| handelsüblicher Entschäumer | 0,1 Tle. | 0,1 Tle. |
| handelsübliches PU-Anreibehilfsmittel (30 %) | 10,0 Tle. | 10,0 Tle. |

Festkörper: 47 %, Wassergehalt: 45 %, Lösemittelgehalt: 8 % (Zahlen gerundet)

### 3. Beispiel

### Herstellung eines Metallic-Wasserbasislackes/stabilisiert und eines Metallic-Wasserbasislackes/unstabilisiert (Vergleich)

Aus folgenden Bestandteilen wurden Metallic-Wasserbasislacke hergestellt: Die Bindemittel-Dispersionen A und B wurden entsprechend DE-A-43 44 063 Herstellungsbeispiel 1 und Herstellungsbeispiel 2 hergestellt. Es handelt sich um wäßrige Polyurethandispersionen.

| Bestandteil | Vergleichsbeispiel | Froststabile Variante |
|---|---|---|
| Dispersion A | 19,7 Tle. | 19,7 Tle. |
| Dispersion B | 21,6 Tle. | 21,6 Tle. |
| Wasser | 42,8 Tle. | 32,8 Tle. |
| Proteinlösung | 0,0 Tle. | 10,0 Tle. |
| handelsübliches Bakterizid | 0,2 Tle. | 0,2 Tle. |
| n-Butanol | 3,3 Tle. | 3,3 Tle. |
| Butylglykol | 3,8 Tle. | 3,8 Tle. |
| N-Methylpyrrolidon | 0,5 Tle. | 0,5 Tle. |
| handelsüblicher Broncestabilisator | 0,4 Tle. | 0,4 Tle. |
| handelsüblicher Verdicker | 2,5 Tle. | 2,5 Tle. |
| N,N-Dimethylethanolamin | 0,2 Tle. | 0,2 Tle. |
| handelsübliche Aluminiumpaste | 5,0 Tle. | 5,0 Tle. |

Festkörper: 20 %, Wassergehalt: 60 %, Lösemittelgehalt: 10 % (Zahlen gerundet).

### 4. Beispiel

### Herstellung eines Wasserklarlackes/stabilisiert und eines Wasserklarlackes/unstabilisiert (Vergleich)

Aus den folgenden Bestandteilen wurden Wasserklarlacke hergestellt. Bei der Bindemitteldispersion handelt es sich um die wäßrige Dispersion eines OHfunktionellen urethanmodifizierten Polyesters.

### Herstellung der Stammkomponente eines 2K-Wasserklarlacks

| Bestandteil | Vergleichsbeispiel | Froststabile Variante |
|---|---|---|
| Bindemittel-Dispersion (40%ig) | 73,4 Tle. | 73,4 Tle. |
| Butylglykol | 3,7 Tle. | 3,7 Tle. |
| handelsübliche Lichtschutzmittelkombination | 1,8 Tle. | 1,8 Tle. |
| handelsüblicher Polyurethanverdicker | 1,3 Tle. | 1,3 Tle. |
| handelsübliches Verlaufsmittel | 1,3 Tle. | 1,3 Tle. |
| handelsübliches Bakterizid | 0,2 Tle. | 0,2 Tle. |
| Proteinlösung | 0,0 Tle. | 10,0 Tle. |
| Wasser | 18,3 Tle. | 8,3 Tle. |

Die Härterkomponente ist lösemittelhaltig und bedarf keiner Frosistabilisierung.

### Prüfung auf Froststabilität

Jeweils 1 kg der in den Beispielen 2-3 hergestellten Wasserbasislacke und der im Beispiel 4 hergestellten Klarlacke wurden bei verschiedenen Temperaturen (siehe Tabellen 1-3) eingefroren und 72 Stunden bei der jeweiligen Temperatur gelagert. Danach wurde das Lackmaterial innerhalb von 24 Stunden bei Raumtemperatur (21 °C) aufgetaut.

### Applikation

Die Wasserbasislacke wurden auf mit üblichen Füllern beschichtete Probebleche appliziert und nach kurzem Ablüften naß-in-naß mit einem üblichen lösemittelbasierenden Klarlack überlackiert. Die Härtung erfolgte 30 min bei 60 °C.

Die Ergebnisse der Untersuchungen am flüssigen Lack und am applizierten und gehärteten Überzug sind in den folgenden Tabellen dargestellt.

**Tabelle 1:**

| Uni-Wasserbasislack | | | | | | | | |
|---|---|---|---|---|---|---|---|---|
| Temperatur | Beispiel | | | Δ E (1) | Vergleichsbeispiel | | | ΔE (1) |
| | Viskosität (4) (mPas bei 235 s⁻¹) | | | | Viskosität (4) (mPas bei 235 s⁻¹) | | | |
| °C | 0d | 7d | 28d | | 0d | 7d | 28d | |
| 20 | 320 | 430 | 440 | 0,0 | 340 | 420 | 410 | 0,0 |
| 0 | 330 | 420 | 420 | 0,0 | 330 | 440 | 430 | 0,0 |
| -3,5 | 320 | 420 | 430 | 0,3 | 370 | 440 | 510 | 0,3 |
| -5 | 350 | 450 | 430 | 0,1 | 430 | 570 | 820 | 0,7 |
| -10 | 370 | 420 | 440 | 0,5 | 600 | 760 | (2) | (3) |
| -15 | 360 | 420 | 460 | 0,3 | 620 | (2) | (2) | (3) |
| -20 | 380 | 460 | 510 | 0,4 | 780 | (2) | (2) | (3) |
| -25 | 400 | 650 | 810 | 0,7 | 890 | (2) | (2) | (3) |
| -30 | 500 | 780 | (2) | 0,8 | (2) | (2) | (2) | (3) |

| | | | | | | | | |
|---|---|---|---|---|---|---|---|---|
| (1) Farbabstand von der unbelasteten, nicht gealterten Probe Nach DIN 6175 ΔE ≤ 0,5 akzeptabel, ΔE > 0,5 nicht akzeptabel | | | | | | | | |
| (2) nicht mehr messbar | | | | | | | | |
| (3) konnte nicht mehr appliziert werden | | | | | | | | |
| (4) bestimmt nach DIN 53019 mit einem Rotationsviskosimeter Haake Rotovisco^{R}500, Meßsystem MV1 (sog. Couette System). | | | | | | | | |

**Tabelle 2:**

| Metallic-Wasserbasislack | | | | | | | | |
|---|---|---|---|---|---|---|---|---|
| Temperatur | Beispiel | | | Metallic-Effekt | Vergleichsbeispiel | | | Metallic-Effekt |
| | Viskosität(3) (mPas bei 235 s⁻¹) | | | | Viskosität(3) (mPas bei 235 s⁻¹) | | | |
| °C | 0d | 7d | 28d | (1) | 0d | 7d | 28d | (1) |
| 20 | 410 | 430 | 440 | 1 | 430 | 420 | 410 | 1 |
| 0 | 430 | 420 | 420 | 1 | 420 | 440 | 430 | 1 |
| - 3,5 | 440 | 420 | 430 | 1 | 415 | 440 | 510 | 2 |
| -5 | 420 | 450 | 430 | 1 | 440 | 570 | 820 | 3 |
| -10 | 450 | 420 | 440 | 1 | 530 | 760 | (2) | 4 |
| -15 | 420 | 420 | 460 | 2 | 640 | (2) | (2) | 4 |
| -20 | 480 | 460 | 510 | 3 | 900 | (2) | (2) | 4 |
| -25 | 510 | 650 | 810 | 3 | (2) | (2) | (2) | 4 |
| -30 | 560 | 780 | (2) | 3 | (2) | (2) | (2) | 4 |

| | | | | | | | | |
|---|---|---|---|---|---|---|---|---|
| (1) 1 = sehr gut, 2 = gut, 3 = bedingt brauchbar, 4 = unbrauchbar | | | | | | | | |
| (2) nicht meßbar | | | | | | | | |
| (3) bestimmt nach DIN 53019 mit einem Rotationsviskosimeter Haake Rotovisco^{R}500, Meßsystem MV1 (sog. Couette System). | | | | | | | | |

**Tabelle 3:**

| Wasserklarlack | | | | | | | | |
|---|---|---|---|---|---|---|---|---|
| Temperatur | Beispiel | | | Verarbeitung | Vergleichsbeispiel | | | Verarbeitung |
| | Viskosität (2) (mPas bei 235 s⁻¹) | | | | Viskosität (2) (mPas bei 235 s⁻¹) | | | |
| °C | 0d | 7d | 28d | (1) | 0d | 7d | 28d | (1) |
| 20 | 480 | 470 | 440 | 1 | 470 | 460 | 430 | 1 |
| 0 | 470 | 450 | 460 | 1 | 480 | 490 | 490 | 1 |
| -3,5 | 480 | 490 | 480 | 1 | 520 | 560 | 550 | 2 |
| -5 | 480 | 500 | 490 | I | 540 | 580 | 630 | 2 |
| -10 | 510 | 510 | 530 | 1 | 560 | 550 | 920 | 2 |
| -15 | 500 | 530 | 550 | 1 | 780 | 860 | (2) | 3 |
| -20 | 630 | 680 | 710 | 2 | 850 | 900 | (2) | 3 |
| -25 | 720 | 750 | 760 | 2 | (2) | (2) | (2) | 3 |
| -30 | 790 | 850 | (2) | 3 | (2) | (2) | (2) | 3 |

| | | | | | | | | |
|---|---|---|---|---|---|---|---|---|
| (1) direkt nach Auftauen 1 = in Ordnung, 2 = Viskositätseinstellung möglich, 3 = unbrauchbar | | | | | | | | |
| (2) bestimmt nach DIN 53019 mit einem Rotationsviskosimeter Haake Rotovisco^{R}500, Meßsystem MV1 (sog. Couette System). | | | | | | | | |

## Patentansprüche

1. Verwendung von Frostschutzproteinen zur Froststabilisierung wäßriger Überzugsmittel und wäßriger Halbfabrikate bzw. Modulbausteine zur Herstellung wäßriger Überzugsmittel.

2. Wäßrige Überzugsmittel und wäßrige Halbfabrikate bzw. Modulbausteine zur Herstellung wäßriger Überzugsmittel, **dadurch gekennzeichnet, daß** diese Frostschutzproteine enthalten.

3. Wäßrige Überzugsmittel und wäßrige Halbfabrikate bzw. Modulbausteine zur Herstellung wäßriger Überzugsmittel gemäß Anspruch 2, **dadurch gekennzeichnet, daß** diese
A) ein oder mehrere wasserverdünnbare Bindemittel,
B) Wasser,
C) ein oder mehrere Frostschutzproteine,
D) gegebenenfalls ein oder mehrere Vernetzer,
E) gegebenenfalls Pigmente, Füllstoffe und lackübliche Additive,
F) gegebenenfalls organische Lösemittel und weitere Hilfsstoffe wie z.B. antibakteriell und/oder antifungizid wirkende Substanzen,
enthalten.

4. Wäßrige Überzugsmittel und wäßrige Halbfabrikate bzw. Modulbausteine zur Herstellung wäßriger Überzugsmittel gemäß Anspruch 2 oder 3, **dadurch gekennzeichnet, daß** die Frostschutzproteine in Mengen von 0,001 bis 0,2 Gew.-%, bevorzugt in Mengen von 0,002 bis 0,1 Gew.-% bezogen auf das gesamte Überzugsmittel enthalten sind.

## Claims

1. The use of frost protection proteins for the frost-stabilisation of aqueous coatings and aqueous semi-finished products or modular constituents for preparing aqueous coatings.

2. Aqueous coatings and aqueous semi-finished products or modular constituents for preparing aqueous coatings, **characterised in that** these contain frost protection proteins.

3. Aqueous coatings and aqueous semi-finished products or modular constituents for preparing aqueous coatings in accordance with Claim 2, **characterised in that** these contain
A) one or more water-dilutable binders,
B) water,
C) one or more frost protection proteins,
D) optionally, one or more cross-linking agents,
E) optionally, pigments, fillers and conventional lacquer additives,
F) optionally, organic solvents and other auxiliary agents such as e.g. antibacterial and/or antifungicidal substances.

4. Aqueous coatings and aqueous semi-finishedproducts or modular constituents for preparing aqueous coatings in accordance with Claim 2 or 3, **characterised in that** they contain the frost protection proteins in amounts of 0.001 to 0.2 wt.%, preferably in amounts of 0.002 to 0.1 wt/%, with respect to the total coating agent.

## Revendications

1. Utilisation de protéines antigel pour la stabilisation antigel d'agents de recouvrement aqueux et de demi-produits aqueux ou de composants modulaires pour la fabrication d'agents de recouvrement aqueux.

2. Agents de recouvrement aqueux et demi-produits aqueux ou composants modulaires pour la fabrication d'agents de recouvrement aqueux, **caractérisés en ce qu'**ils contiennent des protéines antigel.

3. Agents de recouvrement aqueux et demi-produits aqueux ou composants modulaires pour la fabrication d'agents de recouvrement aqueux selon la revendication 2, **caractérisés en ce que** ceux-ci contiennent
A) un ou plusieurs liants diluables à l'eau,
B) de l'eau,
C) une ou plusieurs protéines antigel
D) éventuellement un ou plusieurs réticulants,
E) éventuellement des pigments, des agents de charge et des additifs classiques pour laque,
F) éventuellement des solvants organiques et d'autres agents auxiliaires comme par exemple des substances à effet antibactérien et/ou antifongicide.

4. Agents de recouvrement aqueux et demi-produits aqueux ou composants modulaires pour la fabrication d'agents de recouvrement aqueux selon la revendication 2 ou 3, **caractérisés en ce que** les protéines antigel sont contenues dans des quantités de 0,001 jusqu'à 0,2% de poids, de préférence dans des quantités de 0,002 jusqu'à 0,1 % en poids par rapport à l'agent de recouvrement global.
